# EUROPÄISCHE PATENTANMELDUNG

(11) **EP 1 026 869 A1**
(43) Veröffentlichungstag der Anmeldung: **09.08.2000**
(21) Anmeldenummer: 99124084.7
(22) Anmeldetag: 09.12.1999
(51) Int. Cl.: H04M 1/247

(54) **Endgerät für die Telekommunikation sowie Verfahren zur Steuerung eines derartigen Endgeräts sowie von Telekommunikationsdiensten**

(30) Priorität: 05.02.1999 DE 19904590
(71) Anmelder: Deutsche Telekom AG, 53113 Bonn (DE)
(72) Erfinder: Neuhoff, Mario, 51597 Morsbach (DE)

(57) **Zusammenfassung**

Die Erfindung betrifft ein Endgerät für die Telekommunikation, insbesondere Telefon oder Telefaxgerät, umfassend ein Gehäuse mit einer Eingabeeinheit zur Eingabe von Steuerbefehlen, wobei die Eingabeeinheit einen berührungssensitiven Bildschirm (Touch Panel) umfaßt, welcher in das Gehäuse des Endgeräts integriert ist. Die Erfindung betrifft weiterhin ein Verfahren zur Steuerung eines Endgeräts für die Telekommunikation sowie von Telekommunikationsdiensten mittels eines berührungssensitiven Bildschirms als Eingabeeinheit.

## Beschreibung

### Technisches Gebiet:

Die Erfindung betrifft ein Endgerät für die Telekommunikation, insbesondere ein Telefon oder Telefaxgerät, sowie ein Verfahren zur Steuerung eines derartigen Endgerätes sowie von Telekommunikationsdiensten gemäß dem Oberbegriff von Anspruch 1 bzw. 3.

### Stand der Technik:

Herkömmliche Endgeräte für die Telekommunikation, z.B. Telefone, sind zur Eingabe von Steuerbefehlen in der Regel mit einer Tastatur ausgestattet. Darüber hinaus finden sich in älteren Geräten Wählscheiben. Die Tastatur umfaßt bei einfachen Endgeräten die Zahlentasten 0 bis 9 und die Sondertasten * und #. An derartigen Wähltastaturen können im wesentlichen nur Rufnummern eingegeben und einfache Zusatzfunktionen gesteuert werden. Um die Bedienung des Endgeräts komfortabler zu gestalten, sind Endgeräte bekannt, welche neben den genannten Standardtasten zusätzliche Funktionstasten aufweisen, die den Verbindungsaufbau betreffen. Diesen Funktionstasten ist in der Regel eine feste Bedeutung zugewiesen, z.B. Wahlwiederholung oder die Anwahl einer vorbestimmten, gespeicherten Rufhummer. Bei einigen Endgeräten sind zusätzliche Funktionstasten vorgesehen, die Funktionsmodalitäten des Endgeräts selbst betreffen, z.B. Tasten zur Aktivierung eines Lautsprechers oder einer Freisprecheinrichtung.

Neben dem Verbindungsaufbau können mit herkömmlichen Tastaturen auch einfache Zusatzfunktionen, insbesondere Leistungsmerkmale im Netz, gesteuert werden. Dazu sind entweder weitere spezielle Tasten am Endgerät vorgesehen, oder es werden vorbestimmte Tastenkombinationen eingegeben. Endgeräte mit zusätzlichen Funktionen, z.B. einem integrierten Anrufbeantworter, weisen darüber hinaus weitere Tasten auf, welche zur Steuerung der zusätzlichen Funktion dienen, z.B. Anrufbeantworter Ein/Aus, Wiedergabe. Netzbasierende Funktionen, wie z.B. der Anrufbeantworter im Netz, werden über umständliche und wenig nutzerfreundliche Zahlenkombinationen gesteuert.

Mit der Digitalisierung der Vermittlungsstellen eines Telekommunikationsnetzes und durch die ständige Weiterentwicklung der Telekommunikationsnetze, insbesondere des Intelligenten Netzes, sind die technischen Voraussetzungen zur Generierung neuer Kommunikationsdienstleistungsmerkmale und Dienste geschaffen, zu deren Steuerung herkömmliche, festverdrahtete Tastaturen nur bedingt geeignet sind.

Moderne Kommunikationssystems bieten nämlich neben der reinen Punkt-zu-Punkt-Verbindung eine ständig wachsende Anzahl von Zusatzfunktionen. Hierzu gehören beispielsweise neue Leistungsmerkmale der digitalen Vermittlungstechnik, Funktionen des Intelligenten Netzes, zusätzliche Dienste wie z.B. Anrufbeantworter im Netz, Lesen und Schreiben von elektronischer Post (e-Mail) sowie auch die Selbstfreischaltung und Konfiguration von Diensten durch den Kunden. Derartig komplexe Funktionen lassen sich mit herkömmlichen Tastaturen jedoch nur umständlich steuern, indem dafür zusätzliche Tasten vorgesehen werden oder verschachtelte Menü-Strukturen verwendet sind.

Die Steuerung eines Endgeräts und/oder eines Dienstes mit dem Endgerät durch Tastatureingaben ist durch die begrenzte Anzahl der Tasten und die feste Zuordnung von Funktionen zu einzelnen Tasten hinderlich für eine komfortable, benutzerfreundliche und vor allem schnelle Bedienbarkeit. Des weiteren ist die Anzahl der verfügbaren Funktionen, insbesondere bei neueren Endgeräten und modernen Telekommunikationsdiensten, für die Bedienperson nur schwer zu übersehen. In jedem Zustand des Endgeräts ist mechanisch die Eingabe eines jeden Steuerbefehls durch Tastendruck möglich. Es kann daher auch leicht zu einer Eingabe von Fehlbefehlen kommen, welche die gewünschte Funktion des Endgeräts beeinträchtigen, z.B. zum ungewünschten Abbruch einer Telekommunikationsverbindung oder sogar zur Blockade des Endgeräts oder des Dienstes führen können.

### Technische Aufgabe:

Der Erfindung liegt daher die Aufgabe zugrunde, ein Endgerät mit einer Eingabeeinheit bereitzustellen, welches unter Vermeidung der genannten Probleme eine schnelle und sichere Handhabung bzw. Steuerung des Endgerätes und dessen Funktionen ermöglicht. Desweiteren soll ein Verfahren zur Steuerung eines derartigen Endgeräts angegeben werden.

### Offenbarung der Erfindung:

Die Aufgabe wird bei einem Endgerät für die Telekommunikation, insbesondere einem Telefon oder Telefaxgerät, umfassend ein Gehäuse mit einer Eingabeeinheit zur Eingabe von Steuerbefehlen, dadurch gelöst, daß die Eingabeeinheit einen berührungssensitiven Bildschirm (Touch-Panel) umfaßt, welcher in das Gehäuse des Endgeräts integriert ist. Vorteil dabei ist zum einen die erhöhte Bediensicherheit und das Aufheben der "Festverdrahtung" von Tastatur und Steuerbefehl, welche die sinnvolle Nutzung und schnelle Bedienbarkeit des Endgeräts einschränkt, zum anderen der verminderte Bauteilaufwand durch Integration von Eingabeeinheit und optischer Ausgabeeinheit in einem Bauteil.

Dabei kommt insbesondere ein LCD-Grafik-Modul mit Touch-Screen-Bedieneinheit zum Einsatz.

Weiterhin wird die Aufgabe bei einem Verfahren zur Steuerung eines Endgeräts für die Telekommunikation, insbesondere Telefon oder Telefaxgerät, und zur Steuerung von Telekommunikationsdiensten, wobei an einer Eingabeeinheit von einer Bedienperson Steuerbefehle eingegeben werden, in elektrische Steuersignale umgewandelt und von einer Steuereinheit empfangen und ausgewertet werden und die Steuereinheit entsprechend dem Steuersignal eine Änderung des Zustands des Endgeräts veranlaßt, dadurch gelöst, daß die Eingabeeinheit einen berührungssensitiven Bildschirm (Touch Panel) umfaßt, Steuerbefehle durch Berührung des Bildschirms an einer oder mehreren optisch hervorgehobenen Stellen eingegeben werden, wobei die Steuereinheit den Bildschirminhalt derart steuert, daß nur vorbestimmte Steuerbefehle, die dem momentaner Zustand des Endgeräts zugeordnet sind, zur Anzeige gebracht werden und durch Berührung des Bildschirms auswählbar sind. Mit diesem Verfahren wird vorteilhaft eine schnelle und sichere Bedienbarkeit des Endgeräts bei hoher Benutzerfreundlichkeit ermöglicht.

Vorteilhafte Weiterbildungen des Endgeräts und des Verfahrens sind in den Unteransprüchen 2 bzw. 4 und 5 gekennzeichnet.

Vorzugsweise dient das Touch Panel als Ausgabeeinheit zur optischen Anzeige von Informationen über den Zustand des Endgeräts und für die im jeweiligen Zustand durch das Endgerät durchführbaren Funktionen. Dadurch wird verhindert, daß Fehleingaben von Steuerbefehlen zu technischen Störungen des Endgeräts führen.

Die Erfindung hat den großen Vorteil, daß die Eingabeeinheit zur Eingabe von Steuerbefehlen an einem Endgerät als berührungssensitiver Bildschirm auch die Funktionen einer optischen Anzeigevorrichtung wahrnimmt. Dadurch kann unter Verminderung des Bauteilaufwandes auch auf ein zusätzliches ein- oder zweizeiliges Display, wie es in gehobenen Endgeräten meist vorhanden ist, verzichtet werden. Derartige berührungssensitive Bildschirme, bestehend aus druckempfindlichen Flüssigkristallanzeigen und einem geeigneten Steuermodul, werden gegenwärtig u.a. bei Bank- oder Fahrkartenautomaten oder bei sonstigen, im öffentlichen Bereich aufgestellten Informationsautomaten, eingesetzt.

Der Bildschirm wird vorteilhaft so gesteuert, daß nur vorbestimmte, vom Benutzer eingebbare Steuerbefehle, die dem momentanen Zustand des Endgeräts zugeordnet sind, zur Anzeige gebracht werden und durch Berührung des Bildschirms auswählbar sind. Dadurch wird eine Fehlbedienung des Endgeräts vermieden, welche unter Umständen zu einer Fehlfunktion des Endgerätes führt.

Kurzbeschreibung der Zeichnung, in der zeigen:
- Figur 1: eine schematische Darstellung eines erfindungsgemäßen Endgeräts
- Figur 2: ein Ablaufdiagramm des erfindungsgemäßen Verfahrens
- Figur 3: eine Prinzipskizze eines erfindungsgemäßen Endgeräts innerhalb eines Kommunikationsnetzes.

### Wege zur Ausführung der Erfindung:

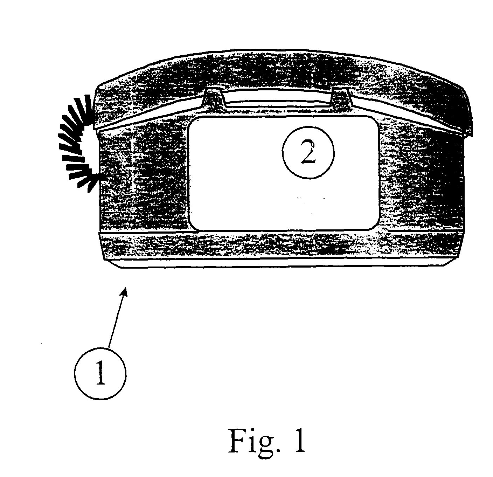

Figur 1 zeigt schematisch ein erfindungsgemäßes Endgerät 1 mit einer Eingabeeinheit, wobei die Eingabeeinheit ein berührungssensitiver Bildschirm ist. Dieser Bildschirm ist in der Regel ein Flüssigkristall-Display (Liquid Crystal Display, LCD) mit einem entsprechenden Steuermodul, welches imstande ist, Berührungen des Displays in elektrische Signale umzusetzen, welche dann ausgewertet werden. Diese Steuersignale werden von einer Systemsteuerung zur Steuerung des Endgeräts und damit auch von Telekommunikationsdiensten umgesetzt.

Der berührungssensitive Bildschirm 2 befindet sich an der Stelle am Gehäuse des Endgeräts, an welcher üblicherweise eine Eingabetastatur angeordnet ist.

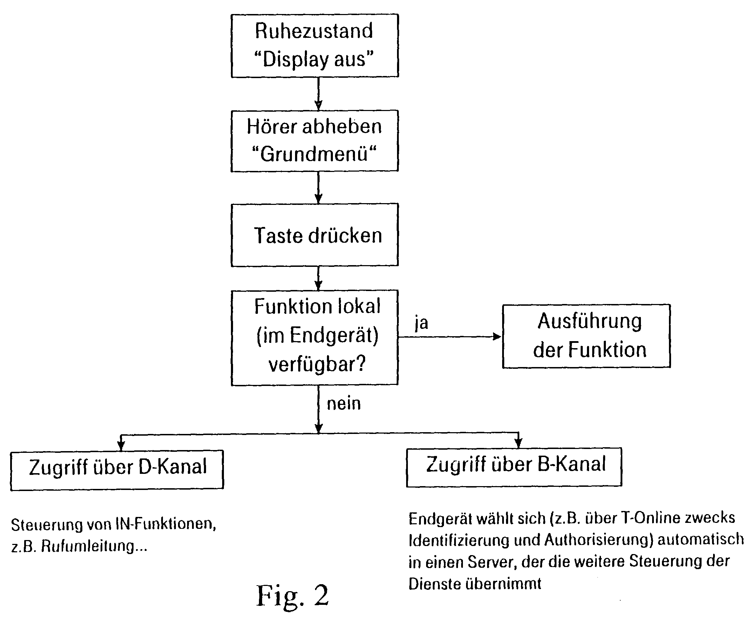

Figur 2 zeigt schematisch den Ablauf des erfindungsgemäßen Verfahrens.

Im Ruhezustand ist das Display dunkel. Nach Abheben des Hörers erscheinen im Display als Grundmenü z. B. die Funktionen "Telefonbuch", "Anrufbeantworter", "Rufumleitung" und "Online-Banking".

### 1. Telefonbuch

Nach Drücken des auf dem Bildschirm visualisierten Buttons "Telefonbuch" stehen beispielsweise zwei verschiedene Arten des Telefonbuchs zur Verfügung: Ein im Speicher des Endgeräts abgelegtes, vom Nutzer selbst programmierbares "lokales Telefonbuch" und der Online-Zugriff auf ein servergestütztes, externes Telefonbuch.

### 1.1 lokales Telefonbuch

Die Realisierung erfolgt grundsätzlich analog wie in vielen herkömmlichen Endgeräten; in der Bedienoberfläche sind Verbesserungen möglich, z.B. Auswahl und Darstellung von Einträgen in Form von Registerkarten. Die Anzahl der Einträge ist durch den verfügbaren Speicherplatz des Endgeräts begrenzt.

### 1.2 servergestütztes Telefonbuch

Nach Aktivieren dieser Funktion wird im Hintergrund eine Verbindung über das Kommunikationsnetz zu einem Server hergestellt, z.B. über das Internet zu einem servergestützten Online-Auskunftsservice ("Teleauskunft"). Im Endgerät wird eine alphanumerische Tastatur eingeblendet, mit der der Nutzer den Namen und ggf. Wohnort des Gesuchten eingibt und bundesweit (oder ggf. sogar darüber hinaus) nach Einträgen im elektronischen Telefonbuch sucht. Diese Signale werden zum Server übertragen. Der Server ermittelt die gewünschren Daten und überträgt diese zurück zum Endgerät, welches sie auf dem Bildschirm darstellt oder direkt den Verbindungsaufbau vornimmt. Nach Auffinden der gewünschten Nummer wird diese durch einen einzigen Tastendruck gewählt, und der Verbindungsaufbau zum Teilnehmer mit der ausgewählten Zielrufnummer wird selbsttätig durch das Endgerät eingeleitet.

Im Gegensatz zu einer herkömmlichen Datenbankabfrage, bei welcher zunächst ein Rechner sowie eine entsprechende Software gestartet, ein Kennwort eingegeben sowie ein Suchbegriff eingegeben werden und sodann das Suchergebnis notiert und manuell am Telekommunikations-endgerät eingegeben werden muß, um eine Verbindung zum gewünschten Teilnehmer aufzubauen, ermöglicht das erfindungsgemäße Endgerät die Zusammenfassung dieser Schritte und damit eine einfachere Bedienbarkeit.

### 2. Anrufbeantworter

Die Realisierung der Funktion kann entweder im Endgerät selbst oder als Anrufbeantworter im Netz erfolgen.

### 2.1 Anrufbeantworter im Endgerät

Die Realisierung erfolgt grundsätzlich analog wie in vielen herkömmlichen Endgeräten; in der Bedienoberfläche sind Verbesserungen möglich, z.B. Darstellung von Pictogrammen für einzelne Funktionstasten, z.B. Start-, Stop-, Pause-Tasten wie bei einem Kassettenrecorder.

### 2.2 Anrufbeantworter im Netz

Bei dieser Realisierungsvariante können die Bedienoberfläche und die Steuerung der Anrufbeantworterfunktion identisch sein mit der unter 2.1 genannten. Die technische Ausführung der Anrufbeantworterfunktion im Endgerät oder im Netz ist für den Nutzer somit irrelevant.

### 3. Rufumleitung

Die Nutzung dieses und anderer Leistungsmerkmale der digitalen Vermittlungsstellen erfolgt wie bei "normalen" Telefonen. Die Programmierung und Aktivierung einer Rufumleitung ist mit dem Touch-Panel jedoch einfacher (bei vielen herkömmlichen Telefonen muß man sich durch verschachtelte Menübäume arbeiten).

### 4. Online-Banking

Nach Aktivieren des Buttons "Online-Banking" wird im Hintergrund eine Verbindung z.B. über T-Online zum Server der gewünschten Bank aufgebaut. Im nächsten Schritt erscheinen im Display die möglichen Funktionen (z.B. Kontostandsabfrage, Überweisung), die über die grafische Oberfläche leicht bedient werden können.

Die Steuerung von Funktionen des Intelligenten Netzes, z.B. Rufumleitung, erfolgt durch Zugriff über einen Steuerkanal, z.B. den D-Kanal. Zum Zugriff auf Server, welche Daten und/oder Funktionen bereitstellen, kann sich das Endgerät alternativ über einen Steuerkanal, z.B. den B-Kanal, automatisch in einen solchen Server einwählen, der die weitere Steuerung der Dienste übernimmt.

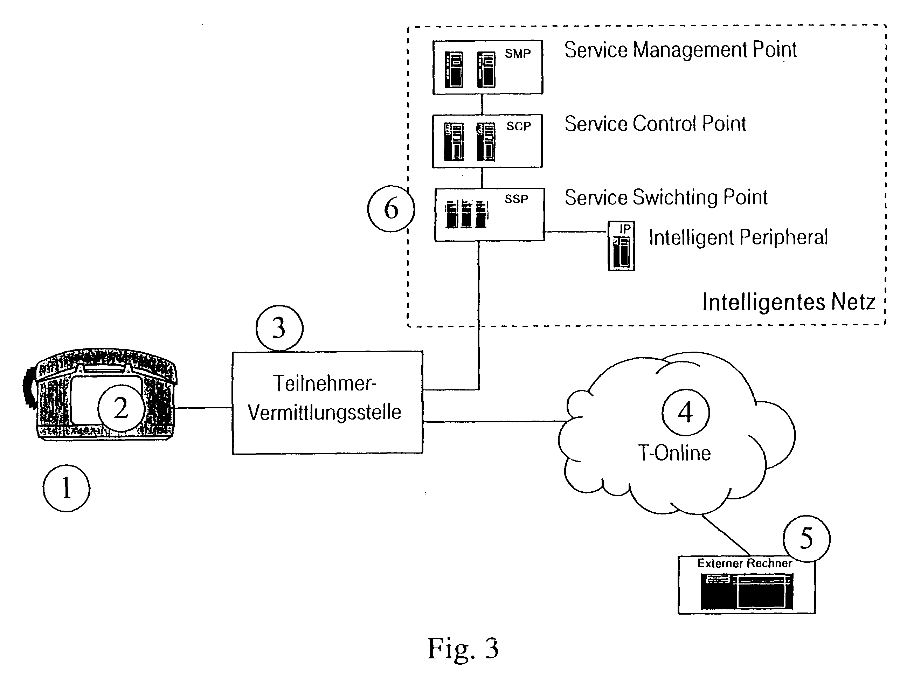

Figur 3 zeigt ein Endgerät 1 mit einem berührungssensitiven Bildschirm 2 als Eingabeeinheit innerhalb eines Kommunikationsnetzes. Zum Abruf nicht lokal im Endgerät 1 gespeicherter Daten bzw. Funktionen stellt das Endgerät automatisch eine Verbindung über das Kommunikationsnetz 4 zu einem Kommunikationspartner 5, hier einem externen Rechner (Server), her. Von dem externen Kommunikationspartner 5 erhält das Endgerät über das Kommunikationsnetz 4 die zur Anzeige auf dem Bildschirm 2 benötigten Inforrnationen. Dies sind beispielsweise Informationen über Teilnehmerrufnummern, welche im Server 5 gespeichert sind.

Andere Daten können aus dem Intelligenten Netz 6 abgefragt werden. Das Intelligente Netz ist dabei ein dem eigentlichen Kommunikationsnetz übergeordnetes Verwaltungsnetz, welches zur Steuerung bestimmter Telekommunikationsdienste dient, z. B. Rufumleitung, gebührenfreie Anrufe, Bereitstellung einheitlicher Rufnummern. Die vom Endgerät 1 benötigten Daten werden zwischen dem Endgerät 1 und dem Intelligenten Netz 6 über die Vermittlungsstelle 3 übertragen.

Die Steuerung des Bildschirms 2 und das Herunterladen der jeweils verfügbaren Funktionen erfolgt damit aus dem Kommunikationsnetz 4 bzw. dem intelligenten Netz 6, z.B. im Rahmen der bereits verfügbaren, von Teilnehmer zu Teilnehmer übertragenen Signale oder über das erweiterte D-Kanal-Protokoll im ISDN.

Durch die Auslagerung der wichtigsten Funktionalitäten in das Netz kann zugleich auf eine hohe Speicher- und Rechenkapazität im Endgerät verzichtet werden.

### Gewerbliche Anwendbarkeit:

Die Erfindung läßt sich im Bereich der Telekommunikation zur Verbesserung der Benutzerfreundlichkeit und der Bediensicherheit von Telekommunikations-Endgeräten vorteilhaft gewerblich einsetzen.

## Patentansprüche

1. Endgerät für die Telekommunikation, insbesondere Telefon oder Telefaxgerät, umfassend ein Gehäuse mit einer Eingabeeinheit zur Eingabe von Steuerbefehlen, dadurch gekennzeichnet, daß die Eingabeeinheit einen berührungssensitiven Bildschirm (Touch Panel) umfaßt, welcher in das Gehäuse des Endgeräts integriert ist.

2. Endgerät nach Anspruchl, dadurch gekennzeichnet, daß das Touch Panel als Ausgabeeinheit zur optischen Anzeige von Informationen über den Zustand des Endgeräts oder eines durch das Endgerät zu steuerbaren Dienstes und für die im jeweiligen Zustand durch das Endgerät durchführbaren Funktionen verwendet wird.

3. Verfahren zur Steuerung eines Endgeräts für die Telekommunikation, insbesondere Telefon oder Telefaxgerät, sowie von Telekommunikationsdiensten wobei an einer Eingabeeinheit von einer Bedienperson Steuerbefehle eingegeben werden, in elektrische Steuersignale umgewandelt und von einer Steuereinheit empfangen und ausgewertet werden und die Steuereinheit entsprechend des Steuersignals eine Änderung des Zustands des Endgeräts veranlaßt, dadurch gekennzeichnet, daß die Eingabeeinheit einen berührungssensitiven Bildschirm (Touch Panel) umfaßt, Steuerbefehle durch Berührung des Bildschirms an einer oder mehreren optisch hervorgehobenen Stellen eingegeben werden, wobei die Steuereinheit den Bildschirminhalt derart steuert, daß nur vorbestimmte Steuerbefehle, die dem momentanen Zustand des Endgeräts zugeordnet sind, zur Anzeige gebracht werden und durch Berührung des Bildschirms auswählbar sind.

4. Verfahren nach Anspruch 3, dadurch gekennzeichnet,
daß sich der Bildschirm im Ruhezustand des Endgeräts in einem Bereitschaftszustand befindet, vorzugsweise abgedunkelt ist, und durch Berührung des Bildschirms und/oder Abnehmen des Hörers aktiviert wird.

5. Verfahren nach Anspruch 3 oder 4, dadurch gekennzeichnet,
daß bei Eingabe eines Steuerbefehls von der Steuereinheit geprüft wird, ob die zur Durchführung der dem Steuerbefehl zugeordneten Funktion notwendigen Daten und/oder Prozeduren lokal in einem Speicher des Endgeräts verfügbar sind, und bei Nichtvorhandensein automatisch der Aufbau einer Kommunikationsverbindung zu einem der Funktion zugeordneten Kommunikationspartner veranlaßt wird.
